# EUROPÄISCHE PATENTANMELDUNG

(11) **EP 2 153 720 A1**
(43) Veröffentlichungstag der Anmeldung: **17.02.2010**
(21) Anmeldenummer: 08014062.7
(22) Anmeldetag: 06.08.2008
(51) Int. Cl.: A01N 43/653, A01N 43/54, A01N 37/02, A01P 3/00

(54) **Formiathaltig Fungizide Mischungen**

(71) Anmelder: LANXESS Distribution GmbH, 40764 Langenfeld (DE)
(72) Erfinder: Saalfeld, Frank, Dipl.-Ing., 51515 Kürten-Dürscheid (DE); Gareiß, Johannes, 50829 Köln (DE)
(74) Vertreter: Deblon, Jörg-Stephan

(57) **Zusammenfassung**

Die Erfindung betrifft ein Verfahren zur Bekämpfung von Pilzen und Sporen sowie dafür geeignete Mittel und ihre Anwendung.

## Beschreibung

Die Erfindung betrifft ein Verfahren zur Bekämpfung von Pilzen und Sporen, wie insbesondere von Pilzen der Familie *Venturiaceae* und ihren Konidien, sowie dafür geeignete Mittel und ihre Anwendung.

Durch pathogene Pilze ausgelöste Erkrankungen von Kulturpflanzen stellen durch ihre Auswirkungen, die von Qualitätsminderung der pflanzlichen Produkte, Belastung derselben mit Toxinen bis hin zum totalen Emteausfall reichen, seit Anbeginn der Landwirtschaft ein gravierendes Problem dar. Bis vor wenigen Jahrzehnten wurde die Bekämpfung von Pilzen fast ausschließlich mit unselektiven, anorganischen Kontaktfungiziden, wie zum Beispiel Bordeauxbrühe und Netzschwefel vorgenommen. Mittlerweile sind auch gut wirksame, organische Kontaktfungizide weit verbreitet. Nachteilig an allen Kontaktfungiziden ist die Tatsache, dass Pilze nur in den ersten Phasen der Interaktion mit der Pflanze bekämpft werden können. In diesen Phasen heften sich zunächst die Sporen des Pilzes an die Pflanzenoberfläche an, keimen aus und der Pilz dringt schließlich in die Pflanze ein. Ist der Pilz erst einmal in das Pflanzengewebe eingedrungen, ist eine Bekämpfung mit Kontaktfungiziden nicht mehr möglich. Ein weiterer Nachteil ist, dass Kontaktfungizide üblicherweise z.B. durch Niederschlag schnell von der Pflanze abgewaschen werden, was häufige Wiederholungen der Anwendung erforderlich macht. Die Abwaschbarkeit in Verbindung mit einer häufigen Anwendung verursacht jedoch eine vergleichsweise hohe Umwelttoxizität der Kontaktfungizide.

Um diese Nachteile zu überwinden, wurden in den letzten Jahrzehnten organische, spezifisch wirkende Fungizide entwickelt. Dabei ist zwischen systemischen, lokalsystemischen und translaminar durchfeuchtenden Fungiziden zu unterscheiden. Allen diesen Fungizidtypen ist dabei gemeinsam, dass sie zumindest in die Pflanzenoberfläche eindringen und von dort mehr oder weniger in der Pflanze verteilt werden (siehe auch Definition weiter unten). Das hat zur Folge, dass eine Auswaschung nicht oder nur in untergeordnetem Maße stattfindet und Pilze auch nach Eindringen in das Pflanzengewebe bekämpft werden können.

Nachteilig an diesen Fungiziden ist allerdings, dass sich bei mehrmaliger Anwendung unter dem Selektionsdruck des jeweiligen Fungizides einzelne Pilzpopulationen schnell durchsetzen können und folglich weitere Behandlungen mit dem gleichen Fungizid am gleichen Ort aufgrund der Resistenzbildung wirkungslos sind. Aus diesem Grund besteht die Notwendigkeit einer komplizierten Spritzfolge im Jahresverlauf unter Verwendung wechselnder Fungizide, was aufwändig und kostenintensiv ist.

Die vorgenannten Nachteile von Kontaktfungiziden, d.h. die typischerweise hohe Abwaschbarkeit verbunden mit nur kurzzeitiger Wirkung und erhöhter Umwelttoxizität, sowie die Nachteile spezifisch wirkender Fungizide, die bei Mehrfachanwendung Resistenzen erzeugen können, machen es wünschenswert, neue fungizide Mittel bereitzustellen, die die vorgenannten Nachteile überwinden.

Gegenstand der Erfindung sind nun fungizide Mittel enthaltend als Komponenten
- zumindest ein Fungizid
- Formiat
- zumindest eine Substanz, die als einmolare Lösung in Wasser oder berechnet auf eine einmolare Lösung in Wasser oder eine wässrige Vergleichsskala einen pH-Wert von 5,0 oder weniger bei Standardbedingungen aufweist. Solche Substanzen werden nachstehend vereinfachend "saure Substanzen genannt".

Als Fungizid eignen sich vorzugsweise solche Fungizide, die ausgewählt sind aus der Gruppe der systemischen, lokalsystemischen oder translaminar durchfeuchtenden, organischen Fungizide oder den nicht-systemischen Fungiziden.

Der Begriff nicht-systemisches Fungizid steht im Rahmen der Erfindung für eine Substanz mit fungizider Wirkung, die nicht oder nur unwesentlich in die Pflanze aufgenommen wird, sondern ihre fungizide Wirkung an der Oberfläche durch Kontakt mit dem Pilz oder seinen Sporen entfaltet. In der Literatur werden daher solche nicht-systemischen Fungizide häufig auch als Kontaktfungizide bezeichnet.

Der Begriff systemisches Fungizid steht im Rahmen der Erfindung für eine Verbindung mit fungizider Wirkung, die nach Aufnahme in die Pflanze, die typischerweise über Blätter oder Wurzeln erfolgt, über das Transportsystem in der Pflanze verlagert wird. In der Regel weisen systemische, organische Fungizide eine gute Wasserlöslichkeit auf.

Der Begriff lokalsystemisches Fungizid steht im Rahmen der Erfindung für eine Verbindung mit fungizider Wirkung, die in die Pflanze aufgenommen wird, aber über das Transportsystem in der Pflanze nicht oder nur in geringem Maße verlagert wird.

Der Begriff translaminar durchfeuchtendes Fungizid steht im Rahmen der Erfindung für eine Verbindung mit fungizider Wirkung, das in die Wachsschicht von Blättern aufgenommen wird, dort ein Depot bildet, und von dort langsam in die Pflanze eindringen kann.

Es sei an dieser Stelle angemerkt, dass der Rahmen der Erfindung alle beliebigen und möglichen Kombinationen der oben stehenden und im Folgenden aufgeführten, allgemeinen oder in Vorzugsbereichen genannten Komponenten, Wertebereiche, bzw. Verfahrensparameter umfasst.

Geeignete Fungizide sind beispielsweise:
- Aldimorph, Ampropylfos, Ampropylfos-Kalium, Andoprim, Anilazin, Azaconazol, Azoxystrobin,
- Benalaxyl, Benodanil, Benomyl, Benzamacril, Benzamacryl-isobutyl, Bialaphos, Binapacryl, Biphenyl, Bitertanol, Blasticidin-S, Bromuconazol, Bupirimat, Buthiobat,
- Calciumpolysulfid, Capsimycin, Captafol, Captan, Carbendazim, Carboxin, Carvon, Chinomethionat (Quinomethionat), Chlobenthiazon, Chlorfenazol, Chloroneb, Chloropicrin, Chlorothalonil, Chlozolinat, Clozylacon, Cufraneb, Cymoxanil, Cyproconazol, Cyprodinil, Cyprofuram,
- Debacarb, Dichlorophen, Diclobutrazol, Diclofluanid, Diclomezin, Dicloran, Diethofencarb, Difenoconazol, Dimethirimol, Dimethomorph, Diniconazol, Diniconazol-M, Dinocap, Diphenylamin, Dipyrithione, Ditalimfos, Dithianon, Dodemorph, Dodine, Drazoxolon,
- Ediphenphos, Epoxiconazol, Etaconazol, Ethirimol, Etridiazol,
- Famoxadon, Fenapanil, Fenarimol, Fenbuconazol, Fenfuram, Fenitropan, Fenpiclonil, Fenpropidin, Fenpropimorph, Fentinacetat, Fentinhydroxyd, Ferbam, Ferimzon, Fluazinam, Flumetover, Fluoromid, Fluquinconazol, Flurprimidol, Flusilazol, Flusulfamid, Flutolanil, Flutriafol, Folpet, Fosetyl-Alminium, Fosetyl-Natrium, Fthalid, Fuberidazol, Furalaxyl, Furametpyr, Furcarbonil, Furconazol, Furconazol-cis, Furmecyclox,
- Guazatin,
- Hexachlorobenzol, Hexaconazol, Hymexazol,
- Imazalil, Imibenconazol, Iminoctadin, Iminoctadinealbesilat, Iminoctadinetriacetat, Iodocarb, Ipconazol, Iprobenfos (IBP), Iprodione, Irumamycin, Isoprothiolan, Isovaledione,
- Kasugamycin, Kresoxim-methyl, Kupfer-Zubereitungen, wie: Kupferhydroxid, Kupfernaphthenat, Kupferoctanoat, Kupferoxychlorid, Kupfersulfat, Kupferoxid, Oxin-Kupfer und Bordeaux-Mischung,
- Mancopper, Mancozeb, Maneb, Meferimzone, Mepanipyrim, Mepronil, Metalaxyl, Metconazol, Methasulfocarb, Methfuroxam, Metiram, Metomeclam, Metsulfovax, Mildiomycin, Myclobutanil, Myclozolin,
- Nickel-dimethyldithiocarbamat, Nitrothal-isopropyl, Nuarimol,
- Ofurace, Oxadixyl, Oxamocarb, Oxolinicacid, Oxycarboxim, Oxyfenthiin,
- Paclobutrazol, Pefurazoat, Penconazol, Pencycuron, Phosdiphen, Pimaricin, Piperalin, Polyoxin, Polyoxorim, Probenazol, Prochloraz, Procymidon, Propamocarb, Propanosine-Natrium, Propiconazol, Propineb, Pyrazophos, Pyrifenox, Pyrimethanil, Pyroquilon, Pyroxyfur,
- Quinconazol, Quintozen (PCNB),
- Schwefel und Schwefel-Zubereitungen,
- Tebuconazol, Tecloftalam, Tecnazen, Tetcyclacis, Tetraconazol, Thiabendazol, Thicyofen, Thifluzamide, Thiophanate-methyl, Thiram, Tioxymid, Tolclofos-methyl, Tolylfluanid, Triadimefon, Triadimenol, Triazbutil, Triazoxid, Trichlamid, Tricyclazol, Tridemorph, Triflumizol, Triforin, Triticonazol,
- Uniconazol,
- Validamycin A, Vinclozolin, Viniconazol,
- Zarilamid, Zineb, Ziram sowie
- Dagger G,
- OK-8705,
- OK-8801,
- α-(1,1-Dimethylethyl)-β-(2-phenoxyethyl)-1H-1,2,4-triazol-1-ethanol,
- α-(2,4-Dichlorphenyl)-β-fluor-b-propyl-1H-1,2,4-triazol-1-ethanol,
- α-(2,4-Dichlorphenyl)-β-methoxy-a-methyl-1H-1,2,4-triazol-1-ethanol,
- α-(5-Methyl-1,3-dioxan-5-yl)-β-[[4-(trifluormethyl)-phenyl]-methylen]-1H-1,2,4-triazol-1-ethanol,
- (5RS,6RS)-6-Hydroxy-2,2,7,7-tetramethyl-5-(1H-1,2,4-triazol-1-yl)-3-octanon,
- (E)-a-(Methoxyimino)-N-methyl-2-phenoxy-phenylacetamid,
- {2-Methyl-1-[[[1-(4-methylphenyl)-ethyl]-amino]-carbonyl]-propyl}-carbaminsäure-1-isopropylester
- 1-(2,4-Dichlorphenyl)-2-(1H-1,2,4-triazol-1-yl)-ethanon-O-(phenylmethyl)-oxim,
- 1-(2-Methyl-1-naphthalenyl)-1H-pyrrol-2,5-dion,
- 1-(3,5-Dichlorphenyl)3-(2-propenyl)-2,5-pyrrolidindion,
- 1-[(Diiodmethyl)-sulfonyl]-4-methyl-benzol,
- 1-[[2-(2,4-Dichlorphenyl)-1,3-dioxolan-2-yl]-methyl]-1H-imidazol,
- 1-[[2-(4-Chlorphenyl)-3-phenyloxiranyl]-methyl]-1H-1,2,4-triazol,
- 1-[1-[2-[(2,4-Dichlorphenyl)-methoxy]-phenyl]-ethenyl]-1H-imidazol,
- 1-Methyl-5-nonyl-2-(phenylmethyl)-3-pyrrolidinol,
- 2',6'-Dibrom-2-methyl-4'-trifluormethoxy-4'-trifluor-methyl-1,3-thiazol-5-carboxanilid,
- 2,2-Dichlor-N-[1-(4-chlorphenyl)-ethyl]-1-ethyl-3-methyl-cyclopropancarboxamid,
- 2,6-Dichlor-5-(methylthio)-4-pyrimidinyl-thiocyanat,
- 2,6-Dichlor-N-(4-trifluormethylbenzyl)-benzamid,
- 2,6-Dichlor-N-[[4-(trifluormethyl)-phenyl]-methyl]-benzamid,
- 2-(2,3,3-Triiod-2-propenyl)-2H-tetrazol,
- 2-[(1-Methylethyl)-sulfonyl]-5-(trichlormethyl)-1,3,4-thiadiazol,
- 2-[[6-Deoxy-4-O-(4-O-methyl-β-D-glycopyranosyl)-a-D-glucopyranosyl]-amino]-4-methoxy-1H-pyrrolo[2,3-d]pyrimidin-5-carbonitril,
- 2-Aminobutan,
- 2-Brom-2-(brommethyl)-pentandinitril,
- 2-Chlor-N-(2,3-dihydro-1,1,3-trimethyl-1H-inden-4-yl)-3-pyridincarboxamid,
- 2-Chlor-N-(2,6-dimethylphenyl)-N'-(isothiocyanatomethyl)-acetamid,
- 2-Phenylphenol(OPP),
- 3,4-Dichlor-1-[4-(difluoromethoxy)-phenyl]-1H-pyrrol-2,5-dion,
- 3,5-Dichlor-N-[cyan[(1-methyl-2-propynyl)-oxy]-methyl]-benzamid,
- 3-(1,1-Dimethylpropyl-1-oxo)-1H-inden-2-carbonitril,
- 3-[2-(4-Chlorphenyl)-5-ethoxy-3-isoxazolidinyl]-pyridin,
- 4-Chlor-2-cyan N,N-dimethyl-5-(4-methylphenyl)-1H-imidazol-1-sulfonamid,
- 4-Methyl-tetrazolo[1,5-a]quinazolin-5(4H)-on,
- 8-(1,1-Dimethylethyl)-N-ethyl-N-propyl-1,4-dioxaspiro[4.5]decan-2-methanamin,
- 8-Hydroxychinolinsulfat,
- 9H-Xanthen-9-carbonsäure-2-[(phenylamino)-carbonyl]-hydrazid,
- bis-(1-Methylethyl)-3-methyl-4-[(3-methylbenzoyl)-oxy]-2,5-thiophendicarboxylat
- cis-1-(4-Chlorphenyl)-2-(1H-1,2,4-triazol-1-yl)-cycloheptanol,
- cis-4-[3-[4-(1,1-Dimethylpropyl)-phenyl-2-methylpropyl]-2,6-dimethyl-morpholin-hydrochlorid,
- Ethyl-[(4-chlorphenyl)-azo]-cyanoacetat,
- Methantetrathiol-Natriumsalz,
- Methyl-1-(2,3-dihydro-2,2-dimethyl-1H-inden-1-yl)-1H-imidazol-5-carboxylat,
- Methyl-N-(2,6-dimethylphenyl)-N-(5-isoxazolylcarbonyl)-DL-alaninat,
- Methyl-N-(chloracetyl)-N-(2,6-dimethylphenyl)-DL-alaninat,
- N-(2,3-Dichlor-4-hydroxyphenyl)-1-methyl-cyclohexancarboxamid.
- N-(2,6-Dimethylphenyl)-2-methoxy-N-(tetrahydro-2-oxo-3-furanyl)-acetamid,
- N-(2,6-Dimethylphenyl)-2-methoxy N-(tetrahydro-2-oxo-3-thienyl)-acetamid,
- N-(2-Chlor-4-nitrophenyl)-4-methyl-3-nitro-benzolsulfonamid,
- N-(4-Cyclohexylphenyl)-1,4,5,6-tetrahydro-2-pyrimidinamin,
- N-(4-Hexylphenyl)-1,4,5,6-tetrahydro-2-pyrimidinamin,
- N-(5-Chlor-2-methylphenyl)-2-methoxy-N-(2-oxo-3-oxazolidinyl)-acetamid,
- N-(6-Methoxy)-3-pyridinyl)-cyclopropancarboxamid,
- N-[2,2,2-Trichlor-1-[(chloracetyl)-amino]-ethyl]-benzamid,
- N-[3-Chlor-4,5'-bis-(2-propinyloxy)-phenyl]-N'-methoxy-methanimidamid,
- N-Formyl-N-hydroxy-DL-alanin Natriumsalz,
- O,O-Diethyl-[2-(dipropylamino)-2-oxoethyl]-ethylphosphoramidothioat,
- O-Methyl-S-phenyl-phenylpropylphosphoramidothioate,
- S-Methyl-1,2,3-benzothiadiazol-7-carbothioat und
- spiro[2H]-1-Benzopyran-2,1'(3'H)-isobenzofuran]-3'-on.

Die erfindungsgemäßen Mittel enthalten vorzugsweise eines, zwei oder drei Fungizide, die in einer noch weiter bevorzugten Ausführungsform aus den vorgenannten ausgewählt sind. Besonders bevorzugt enthalten die erfindungsgemäßen Mittel eines oder zwei Fungizide, die in einer noch weiter bevorzugten Ausführungsform aus den vorgenannten ausgewählt sind.

In einer weiteren besonders bevorzugten Ausführungsform der Erfindung enthalten die erfindungsgemäßen Mittel eines oder zwei organische Fungizide, die aus den vorgenannten ausgewählt sind.

Für den Fall, dass zwei oder mehr Fungizide verwendet werden, ist es bevorzugt, zumindest ein nicht-systemisches oder ein translaminar durchfeuchtendes Fungizid und zumindest ein lokalsystemisches oder systemisches Fungizid auszuwählen.

Ganz besonders bevorzugte, erfindungsgemäße Mittel enthalten als Fungizide Fluquiconazol und Pyrimethanil.

Die erfindungsgemäßen Mittel können einen Anteil von 0,001 bis 90 Gew.-% an Fungiziden enthalten, vorzugsweise 0,1 bis 40 Gew.%.

Der Begriff Formiat umfasst im Rahmen der Erfindung sowohl anorganische als auch organische Formiate sowie Ameisensäure selbst.

In einer bevorzugten Ausführungsform enthält das erfindungsgemäße Mittel Formiat in Form von Kalium-, Natrium- oder Calciumformiat oder Ameisensäure. Davon sind auch Kalium- und Natriumdiformat, Doppelsalze aus Kalium- oder Natriumformiat mit Ameisensäure umfasst.

In einer besonders bevorzugten Ausführungsform enthält das erfindungsgemäße Mittel Galciumformiat.

In einer weiteren, bevorzugten Ausführungsform beträgt das molare Verhältnis von Formiaten zu Fungiziden zwischen 0,1:1 und 5000:1, bevorzugt zwischen größer als 1:1 und 1000:1, besonders bevorzugt zwischen 5:1 und 500:1 und ganz besonders bevorzugt zwischen 10:1 und 250:1.

Die erfindungsgemäßen Mittel enthalten weiterhin saure Substanzen. Substanzen, die als einmolare Lösung in Wasser oder berechnet auf eine einmolare Lösung in Wasser oder eine wässrige Vergleichsskala einen pH-Wert von 5,0 oder weniger bei Standardbedingungen umfassen, zum Beispiel solche Substanzen umfasst, die
- aufgrund guter Wasserlöslichkeit als einmolare Lösung in Wasser vermessen werden können und einen pH-Wert von 5,0 oder weniger bei Standardbedingungen aufweisen
- aufgrund einer Wasserlöslichkeit, die unter ein Mol/l bei Standardbedingungen beträgt als verdünnte wässrige Lösungen vermessen werden müssen aber berechnet auf eine einmolare Lösung in Wasser einen pH-Wert von 5,0 oder weniger bei Standardbedingungen aufweisen würden
- aufgrund geringer Wasserlöslichkeit oder Wasserunlöslichkeit in einem anderen Lösungsmittel als Wasser vermessen werden müssen aber berechnet auf eine wässrige Vergleichsskala einen pH-Wert von 5,0 oder weniger bei Standardbedingungen aufweisen würden

Entsprechende Berechnungen und Tabellen sind nicht nur dem Fachmann hinlänglich bekannt.

Einige Fungizide sind saure Substanzen in Sinne der Erfindung. In diesem Fall ist die Anwesenheit zumindest einer zusätzlichen sauren Substanz nicht erforderlich, aber bevorzugt.

Ameisensäure und Alkalimetalldiformate sind ebenfalls saure Substanzen. In diesem Fall ist die Anwesenheit zumindest einer zusätzlichen sauren Substanz ebenfalls nicht erforderlich, aber bevorzugt.

Geeignete saure Substanzen sind Säuren und saure Salze. Besonders geeignet sind organische Säuren mit einem pK_{^}-Wert von 2,0 bis 5,0 sowie entsprechend sauer wirkende Ammoniumsalze wie beispielsweise Ammoniumchlorid und organische Ammoniumsalze oder Additionsverbindungen wie beispielsweise Alkalimetalldiformate.

Ist Calciumformiat Bestandteil von erfindungsgemäßen Mitteln, so sind Säuren und saure Salze bevorzugt, die mit Calcium-Ionen keinen schwerlöslichen Niederschlag bilden.

Unter schwerlöslichen Calciumsalzen werden im Rahmen der Erfindung solche verstanden, die in Gegenwart der entsprechenden freien Säure und bei pH-Werten von 3,0 bis 6,5 bei Standardbedingungen eine Löslichkeit von weniger als lg/l aufweisen. Geeignete organische Säuren sind beispielsweise Ameisensäure, Essigsäure, Propionsäure, Milchsäure, Weinsäure, Äpfelsäure, Bernsteinsäure und Zitronensäure, besonders bevorzugt ist Zitronensäure.

In einer weiteren bevorzugten Ausführungsform wird das Verhältnis von Fungiziden, Formiaten und sauren Substanzen so gewählt, dass eine Lösung, Suspension, Aufschlämmung oder Emulsion von einem Gew.-% der erfindungsgemäßen Mittel in Wasser einen pH-Wert von 4,0 bis 6,5, bevorzugt 4,0 bis 5,0 und besonders bevorzugt 4,0 bis 4,8 bei Standardbedingungen aufweist.

Die erfindungsgemäßen Mittel können weiterhin verschiedene Zusatzstoffe enthalten. Für die nachstehend genannten Zusatzstoffe besteht jeweils unabhängig voneinander auch die Möglichkeit, dass sie nicht enthalten sind. Mögliche Zusatzstoffe sind beispielsweise:
- Hygroskopische Substanzen und/oder Feuchthaltemittel zur Regulierung der Feuchtigkeit: Hygroskopische Substanzen sind beispielsweise hygroskopische anorganische Salze wie zum Beispiel Calciumchlorid oder Calciumnitrat; geeignete Feuchthaltemittel sind beispielsweise organische Substanzen wie beispielsweise Glycerin, Polydextrose, Sorbit, Xylit, Propylenglykole, Polyethenylenglycole oder Gemische dieser Polyole. Die erfindungsgemäßen Mittel können dabei beispielsweise 0,01 bis 40, vorzugsweise 0,2 bis 20 und besonders bevorzugt 0,5 bis 2 Gew.-% an hygroskopischen Substanzen und/oder Feuchthaltemitteln enthalten.
- Grenzflächenaktive Stoffe, wie beispielsweise Tenside. Tenside können beispielsweise nichtionische, kationische und amphotere Tenside, vorzugsweise anionische Tenside sein. Geeignete anionische Tenside sind beispielsweise Alkylsulfate, Alkylethersulfate, Alkylarylsulfonate, Alkylsuccinate, Alkylsulfosuccinate, N-Alkoylsarkosinate, Acyltaurate, Acylisethionate, Alkylphosphate, Alkyletherphosphate, Alkylethercarboxylate, Alpha-Olefinsulfonate, insbesondere die Alkali- und Erdalkalimetallsalze, z.B. Natrium, Kalium, Magnesium, Calcium, sowie Ammonium- und Triethanolamin-Salze. Die Alkylethersulfate, Alkyletherphosphate und Alkylethercarboxylate können jeweils beispielsweise zwischen 1 bis 10 Ethylenoxid- oder Propylenoxid-Einheiten, bevorzugt 1 bis 3 Ethylenoxideinheiten aufweisen. Geeignet sind zum Beispiel Natriumlaurylsulfat, Ammoniumlaurylsulfat, Natriumlaurylethersulfat, Ammoniumlaurylethersulfat, Natriumlaurylsarkosinat, Natriumoleylsuccinat, Ammoniumlaurylsulfosuccinat, Natriumdodecylbenzolsulfonat, Triethanolamindodecyl-benzolsulfonat. Die erfindungsgemäßen Mittel können dabei beispielsweise 0,01 bis 10, vorzugsweise 0,2 bis 8, besonders bevorzugt 0,3 bis 5 und ganz besonders bevorzugt 0,5 bis 3 Gew.-% an grenzflächenaktiven Stoffen enthalten.
- Benetzungsmittel, wie beispielsweise Alkali-, Erdalkali-, Ammoniumsalze von aromatischen Sulfonsäuren, z.B. Lignin-, Phenol-, Naphthalin-und Dibutylnaphthalinsulfonsäure, sowie von Fettsäuren, Alkyl-und Alkylarylsulfonaten, Alkyl-, Laurylether-und Fettalkohulsulfaten, sowie Salze sulfatierter Hexa-, Hepta-und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenolether, ethoxyliertes Isooctyl-, Octyl-oder Nonylphenol, Alkylphenol-oder Tributylphenylpolyglycolether, Alkylarylpolyetheralkohole, Isotridecylalkohol, Fettalkoholethylenoxid-Kondensate, ethoxyliertes Rizinusöl, Polyoxyethylenalkylether oder Polyoxypropylen, Laurylalkoholpolyglycoletheracetat, Sorbitester, Lignin-Sulfitablaugen oder Methylcellulose. Die erfindungsgemäßen Mittel können dabei beispielsweise 0,01 bis 8, vorzugsweise 0,2 bis 6, besonders bevorzugt 0,3 bis 5 und ganz besonders bevorzugt 0,5 bis 3 Gew.-% an Benetzungsmitteln enthalten.
- Emulgatoren, wie beispielsweise Natrium-, Kalium-und Ammoniumsalze von gradkettigen aliphatischen Carbonsäuren der Kettenlänge C ₁₂-C₂₀, Natriumhydroxyoctadecansulfonat, Natrium-, Kalium-und Ammoniumsalze von Hydroxyfettsäuren der Kettenlänge C₁₂-C₂₀ und deren Sulfierungs-bzw. Acetylierungsprodukte, Alkylsulfate, auch als Triethanolaminsalze, Alkyl-(C₁₀-C₂₀)-sulfonate, Alkyl(C₁₀-C₂₀)-arylsulfonate, Dimethyldialkyl(C₈-Cᵢg)-ammoniumchlorid, Acyl-, Alkyl-, Oleyl-und Alkylaryloxethylate und ihre Sulfierungsprodukte, Alkalisalze der Sulfobernsteinsäureester mit aliphatischen gesättigten einwertigen Alkoholen der Kettenlänge C₄-C₁₆, Sulfobernsteinsäure-4-Ester mit Polyethylenglykolethern von einwertigen aliphatischen Alkoholen der Kettenlänge C ₁₀-C₁₂ (Di-Natriumsalz), Sulfobernsteinsäure-4-Ester mit Polyethylenglykolnonylphenylether (DiNatriumsalz), Sulfobernsteinsäure bis-cyclohexylester (Natriumsalz), Ligninsulfonsäure sowie deren Calcium-, Magnesium-, Natrium-und Ammoniumsalze, Polyoxyethylensorbitanmonooleat mit 20 Ethylenoxidgruppen, Harzsäuren, hydrierte und dehydrierte Harzsäuren sowie deren Alkalisalze, dodecyliertes Diphenyletherdisulfonsaures Natrium sowie Copolymere aus Ethylenoxyd und Propylenoxyd mit einem Mindestgehalt von 10 Gew.-% Ethylenoxid. Vorzugsweise werden als Emulgatoren verwendet: Natriumlaurylsulfat, Natriumlaurylethersulfat, ethoxyliert (3 Ethylenoxidgruppen); die Polyethylenglykol(4-20)ether des Oleylalkohols sowie die Polyethenoxid-(4-14)ether von Nonylphenol. Die erfindungsgemäßen Mittel können dabei beispielsweise 0,01 bis 15, vorzugsweise 0,2 bis 8, besonders bevorzugt 0,5 bis 6 und ganz besonders bevorzugt 1 bis 5 Gew.-% an Emulgatoren enthalten.
- Dispergiermittel, wie beispielsweise Alkylphenolpolyglycolether. Die erfindungsgemäßen Mittel können dabei beispielsweise 0,01 bis 8, vorzugsweise 0,1 bis 6, besonders bevorzugt 0,2 bis 5 und ganz besonders bevorzugt 0,4 bis 3 Gew.-% an Dispergiermitteln enthalten.
- Stabilisatoren, wie z.B. Cellulose und Cellulosederivate. Die erfindungsgemäßen Mittel können dabei beispielsweise 0,01 bis 6, vorzugsweise 00,1 bis 3, besonders bevorzugt 0,01 bis 2 und ganz besonders bevorzugt 0,01 bis 1 Gcw.-% an Stabilisatoren enthalten.
- Haftmittel, wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipid sowie Paraffinöle. Die erfindungsgemäßen Mittel können dabei beispielsweise 0,01 bis 8, vorzugsweise 0,1 bis 4, besonders bevorzugt 0,2 bis 3 und ganz besonders bevorzugt 0,2 bis 2 Gew.-% an Haftmitteln enthalten.
- Spreitmittel, wie beispielsweise Isopropylmyristat Polyoxyethylennonylphenylether und Polyoxyethylenlaurylphenylether. Die erfindungsgemäßen Mittel können dabei beispielsweise 0,01 bis 20, vorzugsweise 0,1 bis 10, besonders bevorzugt 0,1 bis 5 und ganz besonders bevorzugt 0, 1 bis 2 Gew.-% an Spreitmitteln enthalten.
- Organische Lösungsmittel, wie beispielsweise ein- oder mehrwertige Alkohole, Ester, Ketone und Kohlenwasserstoffe. Beispiele für geeignete Lösungsmittel sind Paraffine, z.B. Erdölfraktionen, mineralische und pflanzliche Öle, Butanol oder Glykol sowie deren Ether und Ester, Ketone wie Aceton, Methylethylketon, Methylisobutylketon oder Cyclohexanon. Die erfindungsgemäßen Mittel können dabei beispielsweise 0,01 bis 25, vorzugsweise 0,2 bis 12, besonders bevorzugt 0,5 bis 7 und ganz besonders bevorzugt 1 bis 4 Gew.-% an organischen Lösungsmittel enthalten.
- Duftstoffe und Farbstoffe, wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink. Die erimdungsgemäßen Mittel können dabei beispielsweise jeweils 0,001 bis 4, vorzugsweise 0,01 bis 1, besonders bevorzugt 0,01 bis 0,8 Gew.-% an Duftstoffen und Farbstoffen enthalten.
- Entstaubungsmittel, wie beispielsweise Polyglykole und Polyglykolether, Die erfindungsgemäßen Mittel können dabei beispielsweise jeweils 0,01 bis 2, vorzugsweise 0,05 bis 1, besonders bevorzugt 0,1 bis 0,5 Gew.-% an Entstaubungsmitteln enthalten.
- Puffersubstanzen, Puffersysteme oder pH-Wert-Regulatoren. Die erfindungsgemäßen Mittel können dabei beispielsweise jeweils 0,01 bis 10, vorzugsweise 0,1 bis 5, Gew.-% an Puffersubstanzen, Puffersystemen oder pH-Wert-Regulatoren enthalten.

Vorzugsweise beträgt der Gehalt der vorgenannten Zusatzstoffe in den erfindungsgemäßen Mitteln in Summe 0,01 bis 100, vorzugsweise 0,5 bis 10 und besonders bevorzugt 1 bis 5 Gew.-% bezogen auf die Summe an Fungiziden, Formiaten und Substanzen mit einem pK_{A} Wert von 5,0 oder weniger.

Weiterhin können die erfindungsgemäßen fungiziden Mittel weiterhin jeweils unabhängig voneinander Bakterizide, Insektizide, Akarizide und Wachstumsregulatoren enthalten oder jeweils nicht. Vorzugsweise enthalten die erfindungsgemäßen fungiziden Mittel keine zusätzlichen Bakterizide, Insektizide oder Akarizide als weitere Bestandteile.

Von der Erfindung sind die erfindungsgemäßen Mittel in beliebiger Formulierung enthalten. Bevorzugte Formulierungen sind Kapselsuspensionen (CS), Wasserlösliche Konzentrate (SL), Suspensionskonzentrate (SC), Spritzpulver (WP), Wasserdispergierbare Granulate (WG), wobei Wasserlösliche Konzentrate (SL), Suspensionskonzentrate (SC) und Wasserdispergierbare Granulate (WG) generell bevorzugt sind. Grundsätzlich sind bevorzugte Formulierungsarten im Wesentlichen abhängig von den eingesetzten Fungizidkomponenten und ihren physikalischen Eigenschaften. Da diese jedoch bekannt sind, ist es für den Fachmann gängige Praxis, in wenigen Versuchen eine bevorzugte Formulierungsart zu ermitteln.

Erfindungsgemäße Formulierungen können in an sich bekannter Weise hergestellt werden.

Besonders bevorzugte Mittel enthalten zumindest ein Fungizid, Formiat bezogen auf freie Ameisensäure und zumindest eine zusätzliche sauren Substanz in Gewichtsverhältnissen von 1:(0,5 bis 500):(0,5 bis 500), bevorzugt 1:(10 bis 100):(5 bis 100) und besonders bevorzugt 1:(10 bis 50):(10 bis 50), wobei solche Mittel noch weiter bevorzugt sind, in denen das Gewichtsverhältnis von Formiat bezogen auf freie Ameisensäure und zumindest einer zusätzlicher sauren Substanz 0,1:1 bis 10:1, besonders bevorzugt 1:1 bis 8:1 beträgt. In einer noch weiter bevorzugten Form wird Formiat in die erfindungsgemäßen Mittel Formiat zumindest teilweise, bevorzugt ausschließlich als Calciumformiat eingebracht.

Ganz besonders bevorzugte Mittel enthalten zumindest ein Fungizid, Calciumformiat bezogen auf freie Ameisensäure und zumindest eine organische, bei Standardbedingungen feste Säure mit einem pK_{A} Wert von 2,0 bis 5,0 in Gewichtsverhältnissen von 1:(0,5 bis 500):(0,5 bis 500), bevorzugt 1:(10 bis 100):(5 bis 100) und besonders bevorzugt 1:(10 bis 50):(10 bis 50), wobei solche Mittel noch weiter bevorzugt sind, in denen das Gewichtsverhältnis von Formiat bezogen auf freie Ameisensäure und zumindest einer zusätzlicher sauren Substanz 0,1:1 bis 10:1, besonders bevorzugt 1:1 bis 8:1 beträgt. Ganz besonders bevorzugt sind dabei Mittel, in denen eine organische, bei Standardbedingungen feste Säure Zitronensäure ist.

Ein ganz bevorzugtes Mittel enthält Fluquinconazol, Pyrimethanil, Calciumformiat und Zitronensäure. Solche Mittel sind beispielsweise erhältlich durch Mischung des Produktes Vision® der BASF SE (enthält 50 g/l Fluquinconazol und 200 g/l Pyrimethanil) mit dem Produkt Folanx ® der Lanxess Distribution GmbH (enthält 70 bis 80 Gew.-% Calciumformiat, 14 bis 18 Gew.-% Calciumchlorid und 1 bis 15 Gew.-% Zitronensäure).

Von der Erfindung sind weiterhin wässrige, fungizide Mittel umfasst, die durch Verdünnung der erfindungsgemäßen Mittel mit Wasser erhältlich sind.

Die erfindungsgemäßen Mittel besitzen sehr gute fungizide und sporozide Eigenschaften und eignen sich daher insbesondere zur Bekämpfung von phytopathogenen Pilzen einschließlich ihrer Sporen.

Daher ist von der Erfindung auch ein Verfahren zur Bekämpfung von phytopathogenen Pilzen umfasst, das dadurch gekennzeichnet ist, dass die Bekämpfung unter Einsatz der erfindungsgemäßen Mittel erfolgt.

Phytopathogene Pilze sind beispielsweise Plasmodiophoromyceten, Oomyceten, Chytridiomyceten, Zygomyceten, Ascomyceten, Basidiomyceten und Deuteromyceten.

Phytopathogene Pilze, die durch die erfindungsgemäßen Mittel bekämpfbar sind, sind beispielsweise:

*Alternaria-Arten, Podosphaera-Arten, Sclerotinia*-Arten, *Physalospora canker* insbesondere an Gemüse und Obst, *Botrytis cinerea* (Grauschimmel) insbesondere an Erdbeeren, Gemüse, Zierpflanzen und Reben, *Coxynespora melonis* insbesondere an Gurken, Erdbeeren; *Colletotrichum*-Arten insbesondere an Gurken; *Diplocarpon rosae* insbesondere an Rosen; *Elsinoe fawcetti* und *Diaporthe* citri insbesondere an Citrus-Früchten; *Sphaerotheca*-Arten insbesondere an Gurken, Kürbisgewächsen, Erdbeeren und Rosen; *Cercospora*-Arten insbesondere an Erdnüssen, Zuckerrüben, Eierpflanzen und Dattelpflaumen; *Erysiphe cichoracearum* und *Sphaerotheca fuliginea* insbesondere an Kürbisgewächsen, *Leveiillina taurica* insbesondere an Piment; *Mycosphaerella*-Arten insbesondere an Äpfeln und Japanischer Aprikose; *Phyllactinia kakicola, Gloesporium-Arten* insbesondere an Äpfeln, *Gloesporium kaki*, insbesondere an Japanischer Aprikose; *Gymnosporangium yamadae, Leptotthrydium pomi, Podosphaera leucotricha* und *G*/*oedes pomigena* insbesondere an Äpfeln; *Cladosporium carpo*philum insbesondere an Birnen und Japanischer Aprikose; *Phomopsis*-Arten insbesondere an Birnen; *Phytopora*-Arten insbesondere an Citrus-Früchten, Kartoffeln, Zwiebeln; *Phytophthora infestans* insbesondere an Kartoffeln und Tomaten, *Erysiphe graminis* (echter Mehltau) insbesondere an Getreide, Fusarium-und *Verticillium*-Arten an verschiedenen Pflanzen, *Glomerella cingulata* insbesondere an Tee; *Helminthosporium*-Arten insbesondere an Getreide, Mycosphaerella-Arten insbesondere an Bananen und Erdnüssen, *Plasmopara vilicola* insbesondere an Reben und Grapefruits, Personospora-Arten insbesondere an Zwiebeln, Spinat und Chrysantemen; *Phaeoisariopsis vitis* und *Spaceloma ampelina* insbesondere an Grapefruits; *Pseudocercosporella herpotrichoides* insbesondere an Weizen und Gerste, *Pseudoperonospora*-Arten insbesondere an Hopfen und Gurken, *Puccinia*-Arten und *Typhula*-Arten insbesondere an Getreide, *Pyricularia oryzae* insbesondere an Reis, *Rhizoctonia*-Arten insbesondere an Baumwolle, Reis und Rasen, *Septoria nodorum* insbesondere an Weizen, *Uncinula necator* insbesondere an Reben, *Ustilago*-Arten insbesondere an Getreide und Zuckerrohr, sowie *Venturia*-Arten (Schorf) insbesondere an Äpfeln und Birnen.

Es wurde festgestellt, dass die Wirkung der erfindungsgemäßen Mittel im Vergleich zur bloßen Wirkung der in ihr enthaltenen Fungizide deutlich überlegen ist. Dies ist nach eigenen Erkenntnissen darauf zurückzuführen, dass die Wirkung der Fungizide als Komponente in der Zusammensetzung der erfindungsgemäßen Mittel so gesteigert wird, dass die Aufwandmenge bei gleicher Wirkung im Vergleich zum Einsatz der Fungizide in nicht erfindungsgemäßen Mitteln erheblich gesteigert wird oder sogar Resistenzen gegen Fungizide in nicht erfindungsgemäßen Mitteln durch Ausbringung in Form der erfindungsgemäßen Mittel überwunden werden können. In vielen Fällen werden sogar beide Mechanismen beobachtet.

Die erfindungsgemäßen Mittel bringen daher den besonderen Vorteil mit sich, dass die Mengen an zum Teil umwelttoxischen Fungiziden bei gleicher Wirkung erheblich verringert werden können und Endanwender bei bestehendem Resistenzrisiko insbesondere bei systemischen oder lokalsystemischen Fungiziden in einer Spritzfolge nicht das Fungizid wechseln müssen, sondern z.B. nach Behandlung mit Fungiziden in nicht erfindungsgemäßen Mitteln, das gleiche Fungizid in Form erfindungsgemäßer Mittel ausbringen können.

Mittel enthaltend Fluquinconazol, Pyrimethanil, Calciumformiat und Zitronensäure eignen sich besonders gut zur Bekämpfung von *Venturiaceae* und ihren Konidien, sowie insbesondere der Spezies *Venturia inaequalis* und ihren Konidien. Vorgenannte Mittel eignen sich daher besonders gut zur Verwendung im Obstbau.

Das Verfahren zur Bekämpfung von phytopathogenen Pilzen unter Einsatz der erfindungsgemäßen Mittel kann in an sich bekannter Weise beispielsweise direkt durch Behandlung von Pflanzen und Pflanzenteilen mit dem Mittel oder durch Einwirkung der Mittel auf deren Umgebung, Lebensraum oder Lagerraum erfolgen. Die Ausbringung der erfindungsgemäßen Mittel kann beispielsweise durch Tauchen, Sprühen, Verdampfen, Vernebeln, Streuen, Aufstreichen und bei Vermehrungsmaterial, wie insbesondere bei Samen, vorzugsweise durch ein- oder mehrschichtiges Umhüllen erfolgen. Bei Bäumen kann, vorzugsweise dann, wenn die erfindungsgemäßen Mittel systemische Fungizide enthalten, die Ausbringung auch durch Stammapplikation erfolgen.

Erfindungsgemäß können alle Pflanzen und Pflanzenteile mit den erfindungsgemäßen fungiziden Mitteln und daraus erhältlichen wässrigen Mitteln behandelt werden. Unter Pflanzen werden hierbei alle Pflanzen und Pflanzenpopulationen, wie insbesondere Kulturpflanzen und ihre Populationen verstanden. Unter Kulturpflanzen werden dabei beispielsweise Pflanzen einschließlich transgener Pflanzen und durch Sortenschutzrechte schützbare oder nicht schützbare Pflanzensorten verstanden, die durch konventionelle Züchtungs- und Optimierungsmethoden oder durch biotechnologische und gentechnologische Methoden oder Kombinationen dieser Methoden erhalten werden können. Der Begriff Pflanzenteile umfasst im Rahmen der Erfindung alle oberirdischen und unterirdischen Teile und Organe der Pflanzen, wie z.B. wie z.B. Blätter, Blüten, Fruchtkörper, Früchte, Knollen, Nadeln, Rhizome, Samen, Sprosse, Stängel, Stämme und Wurzeln sowie Erntegut, vegetatives und generatives Vermehrungsmaterial, wie beispielsweise Stecklinge, Knollen, Rhizome, Ableger und Samen.

Die erfindungsgemäßen Mittel werden beispielsweise und bevorzugt in Aufwandmengen von 0,1 bis 1,5 1, vorzugsweise 0,375 bis 0,5 l/ha/mKH (mKH = Meter Kronenhöhe) ausgebracht, wobei sich die Angaben auf wässrige Mittel mit einem Anteil von 0,1 bis 2 Gew.-% an erfindungsgemäßen fungiziden Mitteln bezieht.

Es wurde weiterhin festgestellt, dass eine positive Wirkung der Formiate und der sauren Substanzen auch dann erreicht wird, wenn die Anwendung nicht gleichzeitig durch die Anwendung in Form eines erfindungsgemäßen Mittels erfolgt, sondern auch dann wenn die Behandlung von Pflanzen und Pflanzenteilen mit den Komponenten der erfindungsgemäßen Mittel innerhalb von 72 Stunden, vorzugsweise innerhalb von 36 Stunden erfolgt, bzw. die Einwirkung der Komponenten der erfindungsgemäßen Mittel auf die Umgebung, den Lebensraum oder Lagerraum von Pflanzen und Pflanzenteilen innerhalb von 120 Stunden, vorzugsweise innerhalb von 36 Stunden erfolgt.

Gegenstand der Erfindung ist daher auch ein Verfahren zur Bekämpfung von phytopathogenen Pilzen, das dadurch gekennzeichnet ist, dass Pflanzen und Pflanzenteile innerhalb von 72 Stunden oder die Umgebung, der Lebensraum oder Lagerraum von Pflanzen und Pflanzenteilen innerhalb von 120 Stunden mit den Komponenten 1) bis III)
I) zumindest ein Fungizid
II) Formiat
III) zumindest eine Substanz, die als einmolare Lösung in Wasser oder berechnet auf eine einmolare Lösung in Wasser oder eine wässrige Vergleichsskala einen pH-Wert von 5,0 oder weniger bei Standardbedingungen aufweist
behandelt werden.

Wenn die Behandlung mit den Komponenten I) bis III) nicht gleichzeitig z.B. durch die Anwendung eines erfindungsgemäßen Mittels erfolgt, ist es bevorzugt zunächst ein Mittel enthaltend Komponente I) und danach ein Mittel enthaltend die Komponenten II) und III) anzuwenden.

Ein Mittel enthaltend die Komponenten II) und III) ist vorzugsweise ein Mittel enthaltend Calciumformiat und eine organische Säure wie beispielsweise Zitronensäure. Ein ganz bevorzugtes Mittel enthaltend die Komponenten II) und III) ist das Produkt Folanx® der Lanxess Distribution GmbH mit oben genannter Zusammensetzung.

Die erfindungsgemäßen fungiziden Mittel und daraus erhältlichen wässrigen Mittel eignen sich weiterhin zum Schutz von technischen Materialien gegen Befall und Zerstörung durch unerwünschte Mikroorganismen.

Der Begriff technische Materialien umfasst im Rahmen der Erfindung nicht lebende Materialien zur Verwendung in der Technik, die vor mikrobieller Veränderung oder Zerstörung geschützt werden sollen. Dazu gehören, Klebstoffe, Leime, Papier und Karton, Textilien, Leder, Holz, Anstrichmittel und Kunststoffartikel, Kühlschmierstoffe, Wärmeübertragungsflüssigkeiten und andere Materialien, die von Mikroorganismen befallen oder zersetzt werden können. Dazu gehören beispielsweise auch Teile von Produktionsanlagen wie Kühlwasserkreisläufe.

Der Begriff unerwünschte Mikroorganismen umfasst beispielsweise Bakterien, Pilze, und Algen, vorzugsweise Pilze wie insbesondere Schimmelpilze, holzverfärbende und holzzerstörende Pilze (Basidiomyceten).

Besonders unerwünschte Mikroorganismen sind beispielsweise Mikroorganismen der folgenden Gattungen: *Alternaria*, wie beispielsweise *Alternaria tenuis, Aspergillus*, wie beispielsweise *Aspergillus niger, Chaetomium*, wie beispielsweise *Chaetomium globosum, Coniophora*, wie beispielsweise *Coniophora puetana, Lentinus*, wie beispielsweise *Lentinus tigrinus, Penicillium*, wie beispielsweise *Penicillium glaucum, Polyporus*, wie beispielsweise *Polyporus versicolor, Aureobasidium*, wie beispielsweise *Aureohasidium pullulans, Sclerophoma*, wie beispielsweise *Sclerophoma pityophila, Trichoderma*, wie beispielsweise *Trichoderma viride, Escherichia*, wie beispielsweise *Escherichia coli, Pseudomonas*, wie beispielsweise *Pseudomonas aeruginosa, Staphylococcus*, wie beispielsweise *Staphylococcus aureus*.

Zur weiteren Erläuterung der Erfindung werden die folgenden Beispiele angegeben.

### Beispiele

### A. Bekämpfung von Konidien von Venuria inaequalis

### 1. Konidien:

Bezeichnung: Oberdorf 06
Im Vergleich zur Basissensitivität haben diese Konidien eine Resistenz gegenüber Anilinopyrimidinen und Sterolbiosynthesehemmern.

### 2. Fungizid:

Vision^{®} der Firma BASF SE (enthält 200g/l Pyrimethanil, 50g/ Fluquinconazol) Empfohlene Aufwandmenge: 0,1 %

### 3. Erfindungsgemäßes Mittel:

Mischung aus 1 Gew.-Teil Vision® und 10 Gew.-Teilen Folan® Ca29 (Probe enthält 75 Gew.-% Calciumformiat, 10 Gew.-% Zitronensäure, 13 Gew.-% Calciumchlorid)

### Durchführung:

1. Inokulation und Inkubation der Pflanzen bei 18°C in feuchter Kammer
2. Abtrocknen der Pflanzen
3. kurative Behandlung nach 24h
4. Inkubation im Gewächshaus, bis Schorfflecken sichtbar werden

### Ergebnisse:

Bonitiert wurden die drei jüngsten Blätter zum Zeitpunkt der Inokulation. Hier wurde die durch schorfflecken prozentuale bedeckte Blattfläche geschätzt. Der durchschnittliche Befall der drei ausgewerteten Blätter wurde errechnet. Aus den 2 x 6 Trieben je Behandlung wurde so ein Befallsmittelwert aus zwölf Trieben in der Behandlung berechnet.

Die Ergebnisse sind in der Tab.1 zu sehen.

| Beispiel | Behandlung | Befall in % | Statistik | Wirkungsgrad in % |
|---|---|---|---|---|
| | | | | |
| A-1 | Kontrolle | 22,3 | a | - |
| A-2 | 0,1% Vision | 8,3 | bcd | 63 |
| A-3 | 1 % Erfindungsgemäßes Mittel | 0,7 | d | 97 |

In diesem Versuch erreichte das Fungizid Vision^{®} mit seiner empfohlenen Aufwandmenge von 0,5l/ha/lmKH (= 0,1%) einen signifikanten Wirkungsgrad von 63%. Bei Einsatz des erfindungsgemäßen Mittels in einer Menge, die der empfohlenen Aufwandmenge von Vision^{®} entspricht, erhöhte sich der Wirkungsgrad signifikant auf 97%. Vergleicht man die Wirkung des erfindungsgemäßen Mittels gegen resistente Schorfstämme mit der Wirkung von 0,1% Vision^{®} gegen sensitive Schorfstämme, so ergibt sich eine fast gleiche Wirkung

### B. Bekämpfung von Konidien von Venuria inaequalis mit verringerten Aufwandmengen an Fungiziden

Versuch B wurde analog zu Versuch A durchgeführt, allerdings mit folgenden Abwandlungen:

### Durchführung:

1. Inokulation und Inkubation der Pflanzen bei 18°C in feuchter Kammer
2. Abtrocknen der Pflanzen
3. kurative Behandlung nach 24h
4. Inkubation im Gewächshaus, bis Schorfflecken sichtbar werden

### Ergebnisse:

Bonitiert wurden die drei jüngsten Blätter zum Zeitpunkt der Inokulation. Hier wurde die durch Schorfflecken prozentuale bedeckte Blattfläche geschätzt. Der durchschnittliche Befall der drei ausgewerteten Blätter wurde errechnet. Aus den 2 x 6 Trieben je Behandlung wurde so ein Befallsmittelwert aus zwölf Trieben in der Behandlung berechnet.

Die Ergebnisse sind in der Tab.2 zu sehen.

| Beispiel | Behandlung | Befall in % | Statistik | Wirkungsgrad in % | |
|---|---|---|---|---|---|
| | | | | | |
| B-1 | Kontrolle | 22,3 | a | - | |
| B-2 | 0,033% Vision | | 14,0 | ab | 37 |
| B-3 | 0,011% Vision | | 11,5 | bc | 49 |
| B-4 | 1% Folanx^{®}Ca29 + 0,033% Vision^{®} | | 4,0 | cd | 82 |
| B-5 | 1% Folanx^{®}Ca29 + 0,011% Vision^{®} | | 6,3 | bcd | 72 |

Fazit: Die Zugabe von 5kg/ha Folanx^{®}Ca29 (1 %) erhöht auch die Wirkung der reduzierten Aufwandmengen von Vision^{®}.

## Patentansprüche

1. Fungizide Mittel enthaltend als Komponenten
• zumindest ein Fungizid
• Formiat
• zumindest eine Substanz, die als einmolare Lösung in Wasser oder berechnet auf eine einmolare Lösung in Wasser oder eine wässrige Vergleichsskala einen pH-Wert von 5,0 oder weniger bei Standardbedingungen aufweist.

2. Fungizide Mittelgemäß Anspruch 1, **dadurch gekennzeichnet, dass** die Fungizide ausgewählt sind aus der Gruppe der systemischen, lokalsystemischen oder translaminar durchfeuchtenden, organischen Fungizide oder den nicht-systemischen Fungiziden.

3. Fungizide Mittelgemäß Anspruch 1 oder 2, **dadurch gekennzeichnet, dass** als Fungizide eines oder mehrere der folgenden eingesetzt werden
• Aldimorph, Ampropylfos, Ampropylfos-Kalium, Andoprim, Anilazin, Azaconazol, Azoxystrobin,
• Benalaxyl, Benodanil, Benomyl, Benzamacril, Benzamacryl-isobutyl, Bialaphos, Binapacryl, Biphenyl, Bitertanol, Blasticidin-S, Bromuconazol, Bupirimat, Buthiobat,
• Calciumpolysulfid, Capsimycin, Captafol, Captan, Carbendazim, Carboxin, Carvon, Chinomethionat (Quinomethionat), Chiobenthiazon, Chlorfenazol, Chloroneb, Chloropierin, Chlorothalonil, Chlozolinat, Clozylacon, Cufraneb, Cymoxanil, Cyproconazol, Cyprodinil, Cyprofuram,
• Debacarb, Dichlorophen, Diclobutrazol, Diclofluanid, Diclomezin, Dicloran, Diethofencarb, Difenoconazol, Dimethirimol, Dimethomorph, Diniconazol, Diniconazol-M, Dinocap, Diphenylamin, Dipyrithione, Ditalimfos, Dithianon, Dodemorph, Dodine, Drazoxolon,
• Ediphenphos, Epoxiconazol, Etaconazol, Ethirimol, Etridiazol,
• Famoxadon, Fenapanil, Fenarimol, Fenbuconazol, Fenfuram, Fenitropan, Fenpiclonil, Fenpropidin, Fenpropimorph, Fentinacetat, Fentinhydroxyd, Ferbam, Ferimzon, Fluazinam, Flumetover, Fluoromid, Fluquinconazol, Flurprimidol, Flusilazol, Flusulfamid, Flutolanil, Flutriafol, Folpet, Fosetyl-Aiminium, Fosetyl-Natrium, Fthalid, Fuberidazol, Furalaxyl, Furametpyr, Furcarbonil, Furconazol, Furconazol-cis, Furmecyclox,
• Guazatin,
• Hexachlorobenzol, Hexaeonazol, Hymexazol,
• Imazalil, Imibenconazol, Iminoctadin, Iminoctadinealbesilat, Iminoctadinetriacetat, Iodocarb, Ipconazol, Iprobenfos (IBP), Iprodione, Irumamycin, Isoprothiolan, Isovaledione,
• Kasugamycin, Kresoxim-methyl, Kupfer-Zubereitungen, wie: Kupferhydroxid, Kupfemaphthenat, Kupferoctanoat, Kupferoxychlorid, Kupfersulfat, Kupferoxid, Oxin-Kupfer und Bordeaux-Mischung,
• Mancopper, Mancozeb, Maneb, Meferimzone, Mepanipyrim, Mepronil, Metalaxyl, Metconazol, Methasulfocarb, Methfuroxam, Metiram, Metomeclam, Metsulfovax, Mildiomycin, Myclobutanil, Myclozolin,
• Nickel-dimethyldithiocarbamat, Nitrothal-isopropyl, Nuarimol,
• Ofurace, Oxadixyl, Oxamocarb, Oxolinicacid, Oxycarboxim, Oxyfenthiin,
• Paclobutrazol, Pefurazoat, Penconazol, Pencycuron, Phosdiphen, Pimaricin, Piperalin, Polyoxin, Polyoxorim, Probenazol, Prochloraz, Procymidon, Propamocarb, Propanosine-Natrium, Propiconazol, Propineb, Pyrazophos, Pyrifenox, Pyrimethanil, Pyroquilon, Pyroxyfur,
• Quinconazol, Quintozen (PCNB),
• Schwefel und Schwefel-Zubereitungen,
• Tebuconazol, Tecloftalam, Tecnazen, Tetcyclacis, Tetraconazol, Thiabendazol, Thicyofen, Thifluzamide, Thiophanate-methyl, Thiram, Tioxymid, Tolclofos-methyl, Tolylfluanid, Triadimefon, Triadimenol, Triazbutil, Triazoxid, Trichlamid, Tricyclazol, Tridemorph, Triflumizol, Triforin, Triticonazol,
• Uniconazol,
• Validamycin A, Vinclozolin, Viniconazol,
• Zarilamid, Zineb, Ziram sowie
• Dagger G,
• OK-8705,
• OK-8801,
• α-(1,1-Dimethylethyl)-β-(2-phenoxyethyl)-1H-1,2,4-triazol-1-ethanol,
• α-(2,4-Dichlorphenyl)-β-fluor-b-propyl-1H-1,2,4-triazol-1-ethanol,
• α-(2,4-Dichlorphenyl)-β-methoxy-a-methyl-11H-1,2,4-triazol-1-ethanol,
• α-(5-Methyl-1,3-dioxan-5-yl)-β-[[4-(trifluormethyl)-phenyl]-methylen]-1H-1,2,4-triazol-1-ethanol,
• (5RS,6RS)-6-Hydroxy-2,2,7,7-tetramethyl-5'(1H-1,2,4-triazol-1-yl)-3-octanon,
• (E)-a(Methoxyimino)-N-methyl-2-phenoxy-phenylacetamid,
• {2-Methyl-1-[[[1-(4-methylphenyl)-ethyl]-amino]-carbonyl]-propyl}-carbaminsäure-1-isopropylester
• 1-(2,4-Dichlorphenyl)-2-(11H-1,2,4-triazol-1-yl)-ethanon-O-(phenylmethyl)-oxim,
• 1-(2-Methyl-1-naphthalenyl)-1H-pyrrol-2,5-dion,
• 1-(3,5-Dichlorphenyl)3-(2-propenyl)-2,5-pyrrolidindion,
• 1-[(Diiodmethyl)-sulfonyl]-4-methyl-benzol,
• 1-[[2-(2,4-Dichlorphenyl)-1,3-dioxolan-2-yl]-methyl]-1H-imidazol,
• 1-[[2-(4-Chlorphenyl)-3-phenyloxiranyl]-methyl]-1H-1,2,4-triazol,
• 1-[1-[2-[(2,4-Dichlorphenyl)-methoxy]-phenyl]-ethenyl]-1H-imidazol,
• 1-Methyl-5-nonyl-2-(phenylmethyl)-3-pyrrolidinol,
• 2',6'-Dibrom-2-methyl-4'-trifluormethoxy-4'-trifluor-methyl-1,3-thiazol-5-carboxanilid,
• 2,2-Dichlor-N-[1-(,4-chlorphenyl)-ethyl]-1-ethyl-3-methyl-cyclopropancarboxamid
• 2,6-Dichlor-5-(methylthio)-4-pyrimidinyl-thiocyanat,
• 2,6-Dichlor-N-(4-trifluormethylbenzyl)-benzamid,
• 2,6-Dichlor-N-[[4-(trifluormethyl)-phenyl]-methyl]-benzamid,
• 2-(2,3,3-Triiod-2-propenyl)-2H-tetrazol,
• 2-[(1-Methylethyl)-sulfonyl]-5-(trichlormethyl)-1,3,4-thiadiazol,
• 2-[[6-Deoxy-4-O-(4-O-methyl-β-D-glycopyranosyl)-a-D-glucopyranosyl]-amino]-4-methoxy-1H-pyrrolo[2,3-d]pyrimidin-5-carbonitril,
• 2-Aminobutan,
• 2-Brom-2-(brommethyl)-pentandininitril,
• 2-Chlor-N-(2,3-dihydro-1,1,3-trimethyl-1H-inden-4-yl)-3-pyridincarboxamid,
• 2-Chlor-N-(2,6-dimethylphenyl)-N-(isothioeyanatomethyl)-acelamid,
• 2-Phenylphenol(OPP),
• 3,4-Dichlor-1-[4-(difluoromethoxy)-phenyl]-1H-pyrrol-2,5-dion,
• 3,5-Dichlor-N-[cyan[(1-methyl-2-propynyl)-oxy]-methyl]-benzamid,
• 3-(1,1-Dimethylpropyl-1-oxo)-1H-inden-2-carbonitril,
• 3-[2-(4-Chlorphenyl)-5-ethoxy-3-isoxazolidinyl]-pyridin,
• 4-Chlor-2-cyan N,N-dimethyl-5-(4-methylphenyl)-1H-imidazol-1-sulfonamid,
• 4-Methyl-tetrazolo[1,5-a]quinazolin-5(4H)-on,
• 8-(1,1-Dimethylethyl)-N-ethyl-N-propyl-1,4-dioxaspiro[4.5]decan-2-methanamin,
• 8-Hydroxychinolinsulfat,
• 9H-Xanthen-9-carbonsäure-2-[(phenylamino)-carbonyl]-hydrazid,
• bis-(1-Methylethyl)-3-methyl-4-[(3-methylbenzoyl)-oxy]-2,5-thiophendicarboxylat
• cis-1-(4-Chlorphenyl)-2-(1H-1,2,4-triazol-1-yl)-cycloheptanol,
• cis-4-[3-[4-(1,1-Dimethylpropyl)-phenyl-2-methylpropyl]-2,6-dimethyl-morpholin-hydrochlorid,
• Ethyl-[(4-chlorphenyl)-azo]-cyanoacetat,
• Methantetrathiol-Natriumsalz,
• Methyl-1-(2,3-dihydro-2,2-dimethyl-1H-inden-1-yl)-1H-imidazol-1-5-carboxylat,
• Methyl-N-(2,6-dimethylphenyl)-N-(3-isoxaxolylcarbonyl)-DL-alaninat,
• Methyl-N-(chloracetyl)-N-(2,6-dimethylphenyl)-DL-alaninat,
• N-(2,3-Dichlor-4-hydroxyphenyl)-1-methyl-cyclohexancarboxamid.
• N-(2,6-Dimethylphenyl)-2-methoxy-N-(tetrahydro-2-oxo-3-furanyl)-acetamid,
• N-(2,6-Dimethylphenyl)-2-methoxy N-(tetrahydro-2-oxo-3-thienyl)-acetamid,
• N-(2-Chlor-4-nitrophenyl)-4-methyl-3-nitro-benzolsulfonamid,
• N-(4-Cyclohexylphenyl)-1,4,5,6-tetrahydro-2-pyrimidinamin,
• N-(4-Hexylphenyl)-1,4,5,6-tetrahydro-2-pyrimidinamin,
• N-(5-Chlor-2-methylphenyl)-2-methoxy-N-(2-oxo-3-oxazolidinyl)-acetamid,
• N-(6-Methoxy)-3-pyridinyl)-cyclopropancarboxamid,
• N-[2,2,2-Trichlor-1-[(chloracetyl)-amino]-ethyl]-benzamid,
• N-[3-Chlor-4,5-bis-(2-propinyloxy)-phenyl]-N'-methoxy-methanimidmid,
• N-Formyl-N-hydroxy-DL-alanin Natriumsalz,
• O,O-Diethyl-[2-(dipropylamino)-2-oxoethyl]-ethylphosphoramidothioat,
• O-Methyl-S-phenyl-phenylpropylphosphoramidothioate,
• S-Methyl-1,2,3-benzothiadiazol-7-carbothioat und
• spiro[2H]-1-Benzopyran-2,1'(3'H)-isobenzofuran]-3'-on.

4. Fungizide Mittel gemäß einem der Ansprüche 1 bis 3, **dadurch gekennzeichnet, dass** als Komponenten zwei oder drei Fungizide enthalten sind.

5. Fungizide Mittel gemäß einem der Ansprüche 1 bis 4, **dadurch gekennzeichnet, dass** sie Fluquiconazol und Pyrimethanil enthalten.

6. Fungizide Mittel gemäß einem der Ansprüche 1 bis 5, **dadurch gekennzeichnet, dass** sie einen Anteil von 0,001 bis 90 Gew.-% an Fungiziden enthalten.

7. Fungizide Mittel gemäß einem der Ansprüche 1 bis 6, **dadurch gekennzeichnet, dass** sie Formiat in Form von Kalium-, Natrium- oder Calciumformiat oder Ameisensäure enthalten.

8. Fungizide Mittel gemäß Anspruch 7, **dadurch gekennzeichnet, dass** sie Calcimformiat enthalten.

9. Fungizide Mittel gemäß einem der Ansprüche 1 bis 8, **dadurch gekennzeichnet, dass** das molare Verhältnis von Formiaten zu Fungiziden zwischen 51 und 500:1 liegt.

10. Fungizide Mittel gemäß einem der Ansprüche 1 bis 9, **dadurch gekennzeichnet, dass** als Substanzen, die als einmolare Lösung in Wasser oder berechnet auf eine einmolare Lösung in Wasser oder eine wässrige Vergleichsskala einen pH-Wert von 5,0 oder weniger bei Standardbedingungen aufweisen solche aus der Gruppe bestehend aus Ameisensäure, Essigsäure, Propionsäure, Milchsäure, Weinsäure, Äpfelsäure, Bernsteinsäure und Zitronensäure eingesetzt werden.

11. Fungizide Mittel gemäß einem der Ansprüche 1 bis 10, **dadurch gekennzeichnet, dass** das Gewichtsverhältnis von Fungiziden, Fomiat bezogen auf freie Ameisensäure und Substanzen, die als einmolare Lösung in Wasser oder berechnet auf eine einmolare Lösung in Wasser oder eine wässrige Vergleichsskala einen pH-Wert von 5,0 oder weniger bei Standardbedingungen aufweisen 1:(10 bis 100):(5 bis 100) beträgt.

12. Wässrige Mittel, erhältlich durch Verdünnung von fungiziden Mitteln gemäß einem der Ansprüche 1 bis 11 mit Wasser.

13. Verfahren zur Bekämpfung von phytopathogenen Pilzen, **dadurch gekennzeichnet, dass** die Bekämpfung unter Einsatz von fungiziden Mitteln gemäß einem der Ansprüche 1 bis 11 oder wässrigen Mitteln gemäß Anspruch 12 erfolgt.

14. Verfahren zur Bekämpfung von phytopathogenen Pilzen, **dadurch gekennzeichnet, dass** Pflanzen und Pflanzenteile innerhalb von 72 Stunden oder die Umgebung, der Lebensraum oder Lagerraum von Pflanzen und Pflanzenteilen innerhalb von 120 Stunden mit den Komponenten I) bis III)
I) zumindest ein Fungizid
II) Formiat
III) zumindest eine Substanz, die als einmolare Lösung in Wasser oder berechnet auf eine einmolare Lösung in Wasser oder eine wässrige Vergleichsskala einen pH-Wert von 5,0 oder weniger bei Standardbedingungen aufweist
behandelt werden.

15. Verwendung von fungiziden Mitteln gemäß einem der Ansprüche 1 bis 11 oder wässrigen Mitteln gemäß Anspruch 12 zur Bekämpfung von phytopathogenen Pilzen.

16. Verwendung von fungiziden Mitteln gemäß einem der Ansprüche 1 bis 11 oder wässrigen Mitteln gemäß Anspruch 12 zum Schutz von technischen Materialien gegen Befall und Zerstörung durch unerwünschte Mikroorganismen.
